# FASCICULE DE BREVET EUROPEEN

(11) **EP 3 343 269 B1**
(45) Date de publication et mention de la délivrance du brevet: **06.10.2021**
(21) Numéro de dépôt: 17203821.8
(22) Date de dépôt: 27.11.2017
(51) Int. Cl.: G02B 27/01

(54) **PROCÉDÉ D'OPTIMISATION DU POSITIONNEMENT D'UN AFFICHEUR TÊTE HAUTE**
OPTIMIERUNGSVERFAHREN DER POSITIONIERUNG EINES HEAD-UP-DISPLAYS
A METHOD FOR OPTIMIZING THE POSITIONING OF A HEAD UP DISPLAY

(30) Priorité: 08.12.2016 FR 1662172
(43) Date de publication de la demande: 04.07.2018
(73) Titulaire: ALSTOM Transport Technologies, 93400 Saint-Ouen (FR)
(72) Inventeur: MIGLIANICO, Denis, 75009 PARIS (FR); MOYART, Luc, 59110 LA MADELEINE (FR)
(74) Mandataire: Lavoix

(56) Documents cités:
- EP-A1- 2 466 361
- US-A1- 2008 285 138
- US-A1- 2012 050 138
- US-A1- 2012 256 812

## Description

La présente invention concerne un procédé d'optimisation du positionnement d'un afficheur tête haute dans la cabine de pilotage d'un véhicule.

La présente invention concerne, en outre, un produit programme d'ordinateur associé à un tel procédé.

La conduite d'un véhicule, tel qu'un véhicule ferroviaire, est conditionnée en grande partie par la visibilité qu'a le conducteur de son environnement proche. L'environnement proche comprend, par exemple, des dispositifs de signalisation, des piétons, des cyclistes ou encore d'autres véhicules. Une bonne visibilité permet au conducteur de prendre des décisions appropriées aux moments opportuns et limite, ainsi, les risques de collisions ou d'accidents de voyageurs.

Pour les besoins de la conduite, le conducteur est amené à consulter régulièrement le tableau de bord du véhicule. Cela implique que pendant un bref instant, le conducteur ne regarde plus son environnement, et notamment, la route.

Afin de remédier à cet inconvénient, il est connu d'intégrer des afficheurs tête haute dans le tableau de bord du véhicule. De tels afficheurs tête haute comprennent notamment un projecteur et une lame. Le projecteur est propre à produire un faisceau lumineux dirigé vers la lame en vue de projeter des images sous la forme d'une image virtuelle dans le champ de vision du conducteur. Les informations affichées sur l'afficheur sont, par exemple, disposées sur l'afficheur suivant la norme EN 894-2 en fonction de la nature desdites informations.

Ainsi, de tels afficheurs permettent d'afficher dans le champ de vision du conducteur des informations habituellement affichées sur le tableau de bord. Le conducteur n'a alors plus besoin de quitter, même un bref instant, l'environnement extérieur des yeux pour consulter le tableau de bord.

Toutefois, les différents éléments d'un afficheur tête haute, et notamment le projecteur d'un tel afficheur représentent un volume non négligeable à intégrer au tableau de bord du véhicule. De tels éléments sont alors susceptibles de masquer une partie du pare-brise du véhicule et donc une partie de l'environnement extérieur, ce qui pourrait induire des situations dangereuses.

Les documents US 2012/050138 A (D1) et EP 2 466 361 A (D2) décrivent des exemples d'afficheurs tête haute.

Il existe donc un besoin pour un procédé d'optimisation du positionnement d'un afficheur tête haute dans la cabine de pilotage d'un véhicule permettant de limiter les zones de l'environnement extérieur masquées par l'afficheur.

A cet effet, l'invention a pour objet un procédé d'optimisation selon la revendication 1.

Selon d'autres aspects avantageux de l'invention, le procédé d'optimisation comprend une ou plusieurs des caractéristiques des revendications 2 à 8, prises isolément ou suivant toutes les combinaisons techniquement possibles.

L'invention concerne aussi un produit programme d'ordinateur selon la revendication 9.

D'autres caractéristiques et avantages de l'invention apparaîtront à la lecture de la description qui suit de modes de réalisation de l'invention, donnés à titre d'exemple uniquement et en référence aux dessins qui sont :
- figure 1, une vue schématique de côté d'une cabine de pilotage d'un véhicule et d'un cylindre,
- figure 2, une vue schématique de dessus de la cabine de pilotage et du cylindre de la figure 1, et
- figure 3, une vue schématique d'un afficheur tête haute.

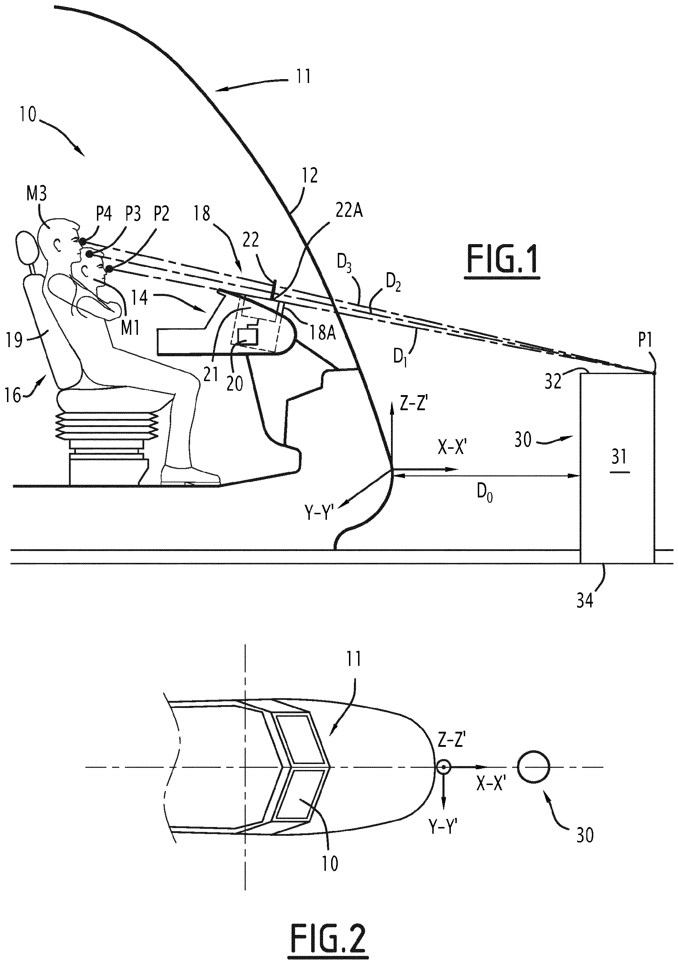

Une cabine 10 de pilotage d'un véhicule 11 est illustrée sur les figures 1 et 2.

Le véhicule 11 est par exemple un véhicule ferroviaire, tel qu'un tramway, ou encore un tram-train.

Dans la suite de la description, les termes « avant » et « arrière » sont définis par rapport au sens de circulation du véhicule 11.

Le terme « longitudinal » est défini par rapport à la direction selon laquelle circule le véhicule 11, c'est-à-dire, dans le cas d'un véhicule ferroviaire, la direction dans laquelle s'étendent les rails sur lesquelles ledit véhicule circule. Le terme « transversal » est défini par rapport à une direction sensiblement perpendiculaire à la direction longitudinale dans un plan horizontal, c'est-à-dire la direction selon laquelle les rails sont écartés l'un de l'autre. La direction perpendiculaire à la direction longitudinale et à la direction transversale est appelée « direction verticale ».

Les termes « haut » et « bas » sont définis par rapport à la direction verticale du véhicule 11, le «bas» étant relativement plus proche que le «haut» des rails sur lesquelles le véhicule 11 circule. Les termes « supérieur » et « inférieur » sont compris de manière analogue aux termes respectivement « haut » et « bas ».

La cabine de pilotage 10 s'étend suivant la direction longitudinale selon un axe longitudinal X-X', suivant la direction transversale selon un axe transversal Y-Y' et suivant la direction verticale selon un axe vertical Z-Z'. De tels axes longitudinal X-X', transversal Y-Y' et vertical Z-Z' sont illustrés sur les figures 1 et 2.

La cabine de pilotage 10 comprend un pare-brise 12, un tableau de bord 14, un emplacement conducteur 16 et un afficheur tête haute 18.

L'emplacement conducteur 16 comprend un siège 19 sur lequel le conducteur du véhicule 11 est susceptible de s'asseoir lors de la conduite du véhicule 11.

L'afficheur tête haute 18 est positionné dans la cabine de pilotage 10 selon un procédé d'optimisation qui sera décrit plus en détail dans la suite de la description.

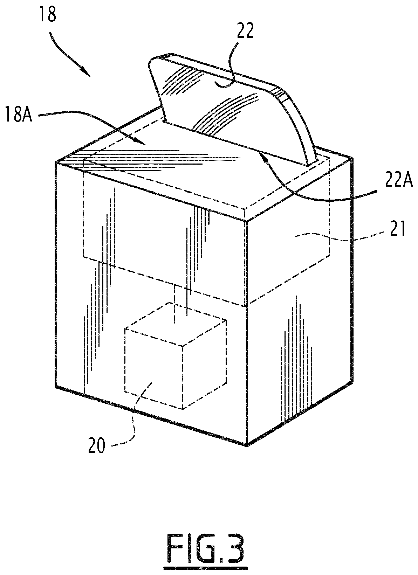

Comme visible sur la figure 3, l'afficheur tête haute 18 comprend un boîtier 18A.

Le boîtier 18A est un volume, par exemple, de forme parallélépipédique, présentant un espace intérieur.

Le boîtier 18A comprend un calculateur 20, un projecteur 21 et une lame 22.

Le calculateur 20 est propre à générer des images ou des séquences vidéos. Les images générées par le calculateur 20 sont, par exemple, relatives à la jauge de vitesse du véhicule 11, à la consommation en énergie du véhicule 11, à des recommandations sur le niveau de traction ou de freinage, à des alarmes relatives au dysfonctionnement de certains composants du véhicule 11, à des indications sur des changements d'aiguillage, des manœuvres ou des attelages à réaliser ou encore à des indications sur des endroits spécifiques traversés par le véhicule 11.

Le projecteur 21 est un système optique propre à projeter les images générées par le calculateur 20 sur la lame 22.

Dans l'exemple illustré par la figure 3, le calculateur 20 et le projecteur 21 sont disposés dans l'espace intérieur du boîtier 18A.

La lame 22 est aussi appelée « combineur ».

La dimension de la lame 22 selon l'axe vertical Z-Z' est, par exemple, supérieure ou égale à 60 millimètres (mm). La dimension de la lame 22 selon l'axe transversal Y-Y' est, par exemple, supérieure ou égale à 150 mm.

La lame 22 présente une base 22A, c'est-à-dire une partie inférieure selon l'axe vertical Z-Z' sur laquelle ladite lame 22 repose.

La lame 22 est, de préférence, courbée.

La lame 22 est, par exemple, une lame semi-transparente.

En variante, la lame 22 est une lame transparente comportant une zone dépolie pour l'affichage des images projetées par le projecteur 21.

Dans l'exemple illustré sur la figure 3, la lame 22 fait saillie à partir du boîtier 18A.

En complément facultatif, la lame 22 est mobile entre une position rétractée, dans laquelle la lame 22 est maintenue dans le boîtier 18A, et une position déployée, dans laquelle la lame 22 fait saillie hors du boîtier 18A.

Un procédé d'optimisation du positionnement de l'afficheur tête haute 18 dans la cabine de pilotage 10 du véhicule 11 va maintenant être décrit.

Le procédé d'optimisation comprend une étape 100 de fourniture de premières données.

Les premières données sont, par exemple, relatives à un cylindre virtuel 30 positionné à l'extérieur du véhicule 11 dans le prolongement longitudinal selon l'axe longitudinal X-X' d'une extrémité avant de la cabine de pilotage 10. Un tel cylindre 30 est illustré sur les figures 1 et 2.

Plus précisément, les premières données sont relatives aux dimensions du cylindre 30, c'est-à-dire au diamètre et à la hauteur du cylindre 30.

Les premières données sont, également, relatives à la distance D₀ selon l'axe longitudinal X-X' entre le cylindre 30 et l'extrémité avant de la cabine de pilotage 10. Le point du cylindre 30 pris en compte pour définir la distance D₀ est, par exemple, un point de la génératrice du cylindre 30 la plus proche selon l'axe longitudinal X-X' de l'extrémité avant de la cabine de pilotage 10.

En variante, un point d'une autre génératrice du cylindre 30 permet de définir la distance D₀.

Le cylindre 30 comprend un tronc 31, un disque supérieur 32 et un disque inférieur 34. Le disque inférieur 34 est en contact avec le sol.

Le cylindre 30 modélise, ainsi, un élément situé sur la route ou sur la voie sur laquelle circule le véhicule 11.

Par exemple, la hauteur du cylindre 30 est comprise entre 1100 mm et 1200 mm, de préférence égale à 1100 mm. Le diamètre du cylindre 30 est compris entre 290 mm et 310 mm, de préférence égal à 300 mm. Un tel cylindre 30 pourrait, par exemple, modéliser un enfant. De telles dimensions sont issues du Guide Technique intitulé « Sécurité des Postes de Conduite des Tramways » édité par le Service Technique des Remontées Mécaniques et des Transports Guidés (Direction Générale des Infrastructures, des Transports et de la Mer), version 3, datée de juin 2015.

La distance D₀ est, par exemple, comprise entre 900 mm et 1100 mm, de préférence égale à 1000 mm par rapport à l'extrémité avant de la cabine de pilotage 10.

Le procédé d'optimisation comprend, également, une étape 110 de fourniture de deuxièmes données relatives aux dimensions d'un premier modèle de conducteur et à la posture de conduite dudit premier modèle de conducteur dans la cabine de pilotage 10. Un exemple d'un premier modèle M1 de conducteur est illustré sur la figure 1.

Le premier modèle de conducteur représente un gabarit humain. Un tel gabarit est, par exemple, issu de la norme machine NF EN 894-4 version 2010. En variante, un tel gabarit est issu de l'une des normes choisies parmi : la norme NF EN ISO 15537, la norme EN 16186-1, la norme NF X 35-002 et la norme SAA HB59,

Plus précisément, le premier modèle de conducteur représente, par exemple, le cinquième percentile de la population féminine, c'est-à-dire une femme de petite taille. La taille d'une telle femme est de 1560 mm selon la norme machine NF EN 894-4 version 2010.

La posture de conduite du premier modèle de conducteur est définie, par exemple, par les éléments suivants :
- le dossier du siège de l'emplacement conducteur 16 est incliné de 5° à 10° vers l'arrière par rapport à la verticale,
- le dos du premier modèle de conducteur est en contact avec le dossier du siège,
- l'amortissement du siège est à une valeur moyenne, et
- le premier modèle de conducteur est en mesure de piloter le véhicule 11.

Le procédé d'optimisation comprend, optionnellement, une étape 120 de fourniture de troisièmes données relatives aux dimensions d'un deuxième modèle de conducteur et à la posture de conduite dudit deuxième modèle de conducteur dans la cabine de pilotage 10.

Le deuxième modèle de conducteur est différent du premier modèle de conducteur.

Le deuxième modèle de conducteur représente un gabarit humain. Un tel gabarit est, par exemple, issu de la norme machine NF EN 894-4 version 2010.

Le deuxième modèle de conducteur représente, par exemple, le cinquantième percentile de la population masculine, c'est-à-dire un homme de taille moyenne. La taille d'un tel homme est de 1749 mm selon la norme machine NF EN 894-4 version 2010.

La posture de conduite du deuxième modèle de conducteur est, par exemple, identique à la posture de conduite du premier modèle de conducteur.

Le procédé d'optimisation comprend, optionnellement également une étape 130 de fourniture de quatrièmes données relatives aux dimensions d'un troisième modèle de conducteur et à la posture de conduite dudit troisième modèle de conducteur dans la cabine de pilotage 10. Un exemple d'un troisième modèle M3 de conducteur est illustré sur la figure 1.

Le troisième modèle de conducteur est différent du premier et du deuxième modèle de conducteur.

Le troisième modèle de conducteur représente un gabarit humain. Un tel gabarit est, par exemple, issu de la norme machine NF EN 894-4 version 2010.

Le troisième modèle de conducteur représente, par exemple, le quatre-vingt quinzième percentile de la population masculine, c'est-à-dire un homme de grande taille. La taille d'un tel homme est de 1911 mm selon la norme machine NF EN 894-4 version 2010.

La posture de conduite du troisième modèle de conducteur est, par exemple, identique à la posture de conduite du premier modèle de conducteur.

Le procédé d'optimisation comprend une étape 140 de détermination d'une première position P1 à partir des premières données.

La première position P1 est la position de l'extrémité arrière du disque supérieure 32 du cylindre 30 selon l'axe longitudinal X-X', c'est-à-dire du point du disque supérieur du cylindre 30 appartenant à la génératrice du cylindre 30 qui est la plus proche de l'extrémité avant de la conduite de pilotage 10 selon l'axe longitudinal X-X'.

En variante, la première position P1 est la position d'un autre point appartenant au cylindre 30. Par exemple, la première position P1 est la position d'un point situé à 50 mm en-dessous selon l'axe vertical Z-Z' de la position de l'extrémité arrière du disque supérieur 32 du cylindre 30.

Le procédé d'optimisation comprend, également, une étape 150 de détermination d'une deuxième position P2 à partir des deuxièmes données. La deuxième position P2 est la position du point milieu entre les yeux du premier modèle de conducteur lorsque ledit premier modèle de conducteur et en posture de conduite dans la cabine de pilotage 10. Le point milieu est définit comme étant le milieu du segment reliant les centres de chaque œil.

La première position P1 et la deuxième position P2 définissent une première droite D₁.

Le procédé d'optimisation comprend, le cas échéant, une étape 160 de détermination d'une troisième position P3 à partir des troisièmes données. La troisième position P3 est la position du point milieu entre les yeux du deuxième modèle de conducteur lorsque ledit deuxième modèle de conducteur est en posture de conduite dans la cabine de pilotage 10.

La première position P1 et la troisième position P3 définissent une deuxième droite D₂.

Le procédé d'optimisation comprend, le cas échéant, également une étape 170 de détermination d'une quatrième position P4 à partir des quatrièmes données. La quatrième position P4 est la position du point milieu entre les yeux du troisième modèle de conducteur lorsque ledit troisième modèle de conducteur est en posture de conduite dans la cabine de pilotage 10.

La première position P1 et la quatrième position P4 définissent une troisième droite D₃.

Le procédé d'optimisation comprend une étape 180 de détermination d'un ensemble de critères pour optimiser le positionnement de l'afficheur 18 dans la cabine de pilotage 10.

Un premier critère, appartenant à l'ensemble de critères, stipule que le boîtier 18A est en-dessous de la première droite D₁ et que la première droite D₁ intersecte la lame, de préférence la base de la lame 22.

Le cas échéant, un deuxième critère, appartenant à l'ensemble de critères, stipule que le boîtier 18A est en-dessous de la deuxième droite D₂ et que la lame 22 intersecte la deuxième droite D₂.

Le cas échéant, un troisième critère, appartenant à l'ensemble de critères, stipule que le boîtier 18A est en-dessous de la troisième droite D₃.

En variante, le troisième critère stipule également que la lame 22 intersecte la troisième droite D₃.

Selon une autre variante, un quatrième critère, appartenant à l'ensemble de critères, stipule que la lame 22 est perpendiculaire à la deuxième droite D₂.

L'homme du métier comprendra que lorsque la lame 22 de l'afficheur 18 considéré est rétractable dans le projecteur 21, les critères ci-dessus sont énoncés pour une lame 22 déployée hors du projecteur 21.

Le procédé d'optimisation comprend, en outre, une étape 190 de positionnement de l'afficheur 18 dans la cabine de pilotage 10 selon au moins l'un des critères déterminés et avantageusement selon les premier et troisième critères. Le terme « positionnement » désigne le positionnement dans l'espace de l'afficheur 18 selon un repère prédéterminé. Un tel repère est, par exemple, un repère cartésien relatif à la cabine de pilotage 10.

Ainsi, pour un conducteur appartenant au cinquième percentile de la population féminine (premier modèle de conducteur dans l'exemple décrit ci-dessus), lorsque le premier critère est respecté, la distance selon la première droite D₁ entre la deuxième position P₂ et la lame 22 est comprise entre 825 mm et 875 mm, plus précisément égale à 850 mm.

Pour un conducteur appartenant au quatre-vingt-quinzième percentile de la population masculine (troisième modèle de conducteur dans l'exemple décrit ci-dessus), lorsque le troisième critère est respecté, la distance selon la troisième droite D₃ entre la quatrième position P4 et la lame 22 est comprise entre 975 mm et 1025 mm, plus précisément égale à 1000 mm.

Ainsi, les positions de la lame 22 et du projecteur 21 sont optimisés de sorte à ce que le boîtier 18A n'obstrue pas la visibilité d'une grande gamme de conducteur allant du cinquième percentile de la population féminine au quatre-vingt-quinzième percentile de la population masculine dans les exemples décrits.

Les conducteurs sont alors capables de voir la vitesse, les alarmes et d'autres informations du tableau de bord sans quitter des yeux l'environnement extérieur, ce qui réduit les risques de collisions et d'accidents. En outre, la vision des conducteurs n'est pas gênée par le boîtier 18A.

De plus, la possibilité de choisir les modèles de conducteurs permet d'optimiser en fonction du conducteur considéré le positionnement de l'afficheur 18 dans la cabine de pilotage 10 du véhicule 11.

Ainsi, un tel procédé permet d'optimiser le positionnement d'un afficheur tête haute dans la cabine de pilotage d'un véhicule de sorte à limiter les zones de l'environnement extérieur masquées par l'afficheur.

L'homme du métier comprendra que le procédé d'optimisation est réalisable en intégrant des étapes correspondant à d'autres modèles de conducteurs ou encore en mettant en œuvre les étapes relatives qu'à un seul ou qu'à deux des trois modèles de conducteurs décrits précédemment.

En outre, l'homme du métier comprendra que le procédé d'optimisation est susceptible d'être mis en œuvre au moyen d'un produit programme d'ordinateur.

De plus, bien que l'invention ait été décrite pour un cylindre 30, l'homme du métier comprendra que l'invention est réalisable pour tout élément ayant une autre forme ou d'autres dimensions qu'un tel cylindre. Un tel autre élément pourrait, par exemple, être un parallélépipède.

En variante, un tel élément pourrait, par exemple, être un point situé sur le sol sur lequel circule le véhicule et à une distance de l'extrémité avant de la cabine de pilotage 10 selon l'axe longitudinal X-X', par exemple, égale à 15 mètres. Un tel élément est alors particulièrement adapté pour l'optimisation du positionnement d'un afficheur tête haute dans un véhicule tel qu'une locomotive ou un automoteur pour lesquels il est souhaité de détecter des signaux bas, c'est-à-dire émis au niveau du sol. Plus précisément, les dimensions et le positionnement de l'élément sont choisis en fonction de la fiche UIC 651 ou de la norme EN 16186-1.

## Revendications

1. Procédé d'optimisation du positionnement d'un afficheur tête haute (18) dans la cabine de pilotage (10) d'un véhicule (11), l'afficheur tête haute (18) comprenant un boîtier (18A), le boîtier (18A) comprenant un projecteur (21) propre à projeter des images et une lame (22) propre à afficher les images projetées par le projecteur (21), la lame (22) faisant saillie à partir du boîtier (18A), la lame (22) présentant une base (22A), la cabine de pilotage (10) comprenant une extrémité avant, le véhicule (11) définissant un espace extérieur, le procédé comprenant les étapes de :
- fourniture de premières données relatives :
• aux dimensions d'un élément (30) positionné dans l'espace extérieur du véhicule (11) dans le prolongement longitudinal de l'extrémité avant de la cabine de pilotage (10),
• à la distance (D₀) de l'élément (30) par rapport à l'extrémité avant de la cabine de pilotage (10),
- fourniture de deuxièmes données relatives aux dimensions d'un premier modèle de conducteur et à la posture de conduite dudit premier modèle de conducteur dans la cabine de pilotage (10), le premier modèle de conducteur ayant des yeux,
- détermination d'une première position (P1) à partir des premières données, la première position (P1) étant la position d'un point de l'élément (30),
- détermination d'une deuxième position (P2) à partir des deuxièmes données, la deuxième position (P2) étant la position d'un point milieu entre les yeux du premier modèle de conducteur lorsque ledit premier modèle de conducteur est en posture de conduite dans la cabine de pilotage (10),
la première position (P1) et la deuxième position (P2) définissant une première droite (D₁), et
- détermination d'un premier critère pour optimiser le positionnement de l'afficheur (18) dans la cabine de pilotage (10), le premier critère stipulant que le boîtier (18A) est en-dessous de la première droite (D₁) et que la première droite (D₁) intersecte la la lame (22), de préférence la base (22A) de la lame.

2. Procédé selon la revendication 1, dans lequel le procédé comprend, en outre, les étapes de :
- fourniture de troisièmes données relatives aux dimensions d'un deuxième modèle de conducteur et à la posture de conduite dudit deuxième modèle de conducteur dans la cabine de pilotage (10), le deuxième modèle de conducteur ayant des yeux, le deuxième modèle de conducteur étant différent du premier modèle de conducteur,
- détermination d'une troisième position (P3) à partir des troisièmes données, la troisième position (P3) étant la position d'un point milieu entre les yeux du deuxième modèle de conducteur lorsque ledit deuxième modèle de conducteur est en posture de conduite dans la cabine de pilotage (10),
la première position (P1) et la troisième position (P3) définissant une deuxième droite (D₂), et
- détermination d'un deuxième critère pour optimiser le positionnement de l'afficheur (18) dans la cabine de pilotage (10), le deuxième critère stipulant que le boîtier (18A) est en-dessous de la deuxième droite (D₂) et que la lame (22) intersecte la deuxième droite (D₂).

3. Procédé selon la revendication 2, dans lequel le procédé comprend, en outre, une étape de détermination d'un quatrième critère pour optimiser le positionnement de l'afficheur (18) dans la cabine de pilotage (10), le quatrième critère stipulant que la lame (22) est perpendiculaire à la deuxième droite (D₂).

4. Procédé selon l'une quelconque des revendications 1 à 3, dans lequel le procédé comprend, en outre, les étapes de :
- fourniture de quatrièmes données relatives aux dimensions d'un troisième modèle de conducteur et à la posture de conduite dudit troisième modèle de conducteur dans la cabine de pilotage (10), le troisième modèle de conducteur ayant des yeux, le troisième modèle de conducteur étant différent du premier et du deuxième modèle de conducteur,
- détermination d'une quatrième position (P4) à partir des quatrièmes données, la quatrième position (P4) étant la position d'un point milieu entre les yeux du troisième modèle de conducteur lorsque ledit troisième modèle de conducteur est en posture de conduite dans la cabine de pilotage (10),
la première position (P1) et la quatrième position (P4) définissant une troisième droite (D₃), et
- détermination d'un troisième critère pour optimiser le positionnement de l'afficheur (18) dans la cabine de pilotage (10), le troisième critère stipulant que le boîtier (18A) est en-dessous de la troisième droite (D₃).

5. Procédé selon la revendication 4, dans lequel :
- lorsque le premier critère est respecté, la distance selon la première droite (D₁) entre la deuxième position (P2) et la lame (22) de l'afficheur tête haute (18) est comprise entre 825 millimètres et 875 millimètres, de préférence égale à 850 millimètres, et
- lorsque le troisième critère est respecté, la distance selon la troisième droite (D₃) entre la quatrième position (P4) et la lame (22) de l'afficheur tête haute (18) est comprise entre 975 millimètres et 1025 millimètres, de préférence égale à 1000 millimètres.

6. Procédé selon l'une quelconque des revendications 1 à 5, dans lequel le ou l'un des modèles de conducteurs est choisi de sorte à représenter :
- le cinquième percentile de la population féminine, ou
- le cinquantième percentile de la population masculine, ou
- le quatre-vingt quinzième percentile de la population masculine.

7. Procédé selon l'une quelconque des revendications 1 à 6, dans lequel le procédé comprend une étape de positionnement de l'élément (30) dans la cabine de pilotage (10) du véhicule (11) selon le ou les critères déterminés.

8. Procédé selon l'une quelconque des revendications 1 à 7, dans lequel l'élément (30) est un cylindre ayant les dimensions suivantes :
- une hauteur comprise entre 1100 millimètres et 1200 millimètres, de préférence égale à 1100 millimètres,
- un diamètre compris entre 290 millimètres et 310 millimètres, de préférence égal à 300 millimètres,
l'élément (30) étant à une distance (D₀) comprise entre 900 millimètres et 1100 millimètres, de préférence égale à 1000 millimètres de l'extrémité avant de la cabine de pilotage (10).

9. Produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'un procédé d'optimisation selon l'une quelconque des revendications 1 à 8 lorsque le programme d'ordinateur est mis en œuvre sur l'unité de traitement des données.

## Patentansprüche

1. Verfahren zum Optimieren der Positionierung eines Head-up-Displays (18) im Cockpit (10) eines Fahrzeugs (11), wobei das Head-up-Display (18) ein Gehäuse (18A) umfasst, wobei das Gehäuse (18A) einen Projektor (21), der zum Projizieren von Bildern geeignet ist, und ein Blatt (22) umfasst, das zum Anzeigen von durch den Projektor (21) projizierten Bildern geeignet ist, wobei das Blatt (22) aus dem Gehäuse (18A) herausragt und das Blatt (22) eine Basis (22A) aufweist, wobei das Cockpit (10) ein vorderes Ende umfasst, wobei das Fahrzeug (11) einen Außenraum definiert, wobei das Verfahren die folgenden Schritte umfasst:
- Liefern von ersten Daten betreffend:
• die Abmessungen eines Elements (30), das im Außenraum des Fahrzeugs (11) in der Längserstreckung des vorderen Endes des Cockpits (10) angeordnet ist,
• den Abstand (D₀) des Elements (30) in Bezug auf das vordere Ende des Cockpits (10),
- Liefern von zweiten Daten bezüglich der Abmessungen eines ersten Fahrermodells und der Fahrhaltung des ersten Fahrermodells im Cockpit (10), wobei das erste Fahrermodell Augen hat,
- Bestimmen einer ersten Position (P1) aus den ersten Daten, wobei die erste Position (P1) die Position eines Punktes auf dem Element (30) ist,
- Bestimmen einer zweiten Position (P2) aus den zweiten Daten, wobei die zweite Position (P2) die Position eines Mittelpunkts zwischen den Augen des ersten Fahrermodells ist, wenn sich das erste Fahrermodell in einer Fahrhaltung im Cockpit (10) befindet,
wobei die erste Position (P1) und die zweite Position (P2) eine erste Gerade (D₁) definieren, und
- Bestimmen eines ersten Kriteriums zur Optimierung der Positionierung des Displays (18) im Cockpit (10), wobei das erste Kriterium vorsieht, dass sich das Gehäuse (18A) unterhalb der ersten Geraden (D₁) befindet und dass die erste Gerade (D₁) das Blatt (22), vorzugsweise die Basis (22A) des Blattes, schneidet.

2. Verfahren nach Anspruch 1, wobei das Verfahren außerdem die folgenden Schritte umfasst:
- Liefern von dritten Daten bezüglich der Abmessungen eines zweiten Fahrermodells und der Fahrhaltung des zweiten Fahrermodells im Cockpit (10), wobei das zweite Fahrermodell Augen hat und das zweite Fahrermodell unterschiedlich zum ersten Fahrermodell ist,
- Bestimmen einer dritten Position (P3) aus den dritten Daten, wobei die dritte Position (P3) die Position eines Mittelpunkts zwischen den Augen des zweiten Fahrermodells ist, wenn sich das zweite Fahrermodell in einer Fahrhaltung im Cockpit (10) befindet,
wobei die erste Position (P1) und die dritte Position (P3) eine zweite Gerade (D₂) definieren, und
- Bestimmen eines zweiten Kriteriums zur Optimierung der Positionierung des Displays (18) im Cockpit (10), wobei das zweite Kriterium vorsieht, dass sich das Gehäuse (18A) unterhalb der zweiten Geraden (D₂) befindet und dass das Blatt (22) die zweite Gerade (D₂) schneidet.

3. Verfahren nach Anspruch 2, wobei das Verfahren außerdem einen Schritt des Bestimmens eines vierten Kriteriums zur Optimierung der Positionierung des Displays (18) im Cockpit (10) umfasst, wobei das vierte Kriterium vorschreibt, dass das Blatt (22) senkrecht zur zweiten Geraden (D₂) liegt.

4. Verfahren nach einem beliebigen der Ansprüche 1 bis 3, wobei das Verfahren außerdem die Schritte umfasst:
- Liefern von vierten Daten bezüglich der Abmessungen eines dritten Fahrermodells und der Fahrhaltung des dritten Fahrermodells im Cockpit (10), wobei das dritte Fahrermodell Augen hat und das dritte Fahrermodell unterschiedlich zum ersten und zum zweiten Fahrermodell ist,
- Bestimmen einer vierten Position (P4) aus den vierten Daten, wobei die vierte Position (P4) die Position eines Mittelpunkts zwischen den Augen des dritten Fahrermodells ist, wenn sich das dritte Fahrermodell in einer Fahrhaltung im Cockpit (10) befindet,
wobei die erste Position (P1) und die vierte Position (P4) eine dritte Gerade (D₃) definieren, und
- Bestimmen eines dritten Kriteriums zur Optimierung der Positionierung des Displays (18) im Cockpit (10), wobei das dritte Kriterium vorschreibt, dass sich das Gehäuse (18A) unterhalb der dritten Geraden (D₃) befindet.

5. Verfahren nach Anspruch 4, bei dem:
- wenn das erste Kriterium erfüllt ist, der Abstand entlang der ersten Geraden (D₁) zwischen der zweiten Position (P2) und dem Blatt (22) des Head-up-Displays (18) zwischen 825 Millimetern und 875 Millimetern liegt, vorzugsweise gleich 850 Millimeter ist, und
- wenn das dritte Kriterium erfüllt ist, der Abstand entlang der dritten Geraden (D₃) zwischen der vierten Position (P4) und dem Blatt (22) des Head-up-Displays (18) zwischen 975 Millimetern und 1025 Millimetern liegt, vorzugsweise gleich 1000 Millimeter ist.

6. Verfahren nach einem beliebigen der Ansprüche 1 bis 5, bei dem das oder eines der Fahrermodelle derart gewählt wird, dass es abbildet:
- das fünfte Perzentil der weiblichen Bevölkerung oder
- das fünfzigste Perzentil der männlichen Bevölkerung oder
- das fünfundneunzigste Perzentil der männlichen Bevölkerung.

7. Verfahren nach einem beliebigen der Ansprüche 1 bis 6, wobei das Verfahren einen Schritt der Positionierung des Elements (30) im Cockpit (10) des Fahrzeugs (11) gemäß dem oder den bestimmten Kriterien umfasst.

8. Verfahren nach einem beliebigen der Ansprüche 1 bis 7, bei dem das Element (30) ein Zylinder mit den folgenden Abmessungen ist:
- einer Höhe zwischen 1100 und 1200 Millimetern, vorzugsweise gleich 1100 Millimeter,
- einem Durchmesser zwischen 290 Millimetern und 310 Millimetern, vorzugsweise gleich 300 Millimeter,
wobei sich das Element (30) in einem Abstand (D₀) von 900 bis 1100 Millimetern, vorzugsweise gleich 1000 Millimeter, vom vorderen Ende des Cockpits (10) befindet.

9. Computerprogrammprodukt, das einen lesbaren Informationsträger aufweist, auf dem ein Computerprogramm gespeichert ist, das Programmanweisungen umfasst, wobei das Computerprogramm auf eine Datenverarbeitungseinheit ladbar ist und angepasst ist, die Ausführung eines Optimierungsverfahrens nach einem beliebigen der Ansprüche 1 bis 8 zu bewirken, wenn das Computerprogramm auf der Datenverarbeitungseinheit implementiert ist.

## Claims

1. A method of optimizing the positioning of a head-up display (18) in the driving cab (10) of a vehicle (11), the head-up display (18) comprising a housing (18A), the housing (18A) comprising a projector (21) adapted to project images and a slide (22) adapted to display the images projected by the projector (21), **characterized in that** the slide (22) protruding from the housing (18A), the slide (22) having a base (22A), the driving cab (10) including a front end, the vehicle (11) defining an exterior space, the method comprising the steps of:
- providing first data on:
• the dimensions of an element (30) positioned in the exterior space of the vehicle (11) in the longitudinal extension of the front end of the driving cab (10),
• the distance (Do) of the element (30) from the front end of the driving cab (10),
- providing second data on the dimensions of a first driver model and on the driving posture of said first driver model in the driving cab (10), the first driver model having eyes,
- determining a first position (P1) from the first data, the first position (P1) being the position of a point on the element (30),
- determining a second position (P2) from the second data, the second position (P2) being the position of a midpoint between the eyes of the first driver model when said first driver model is in a driving posture in the driving cab (10),
the first position (P1) and the second position (P2) defining a first line (D₁), and
- determining a first criterion for optimizing the positioning of the display (18) in the driving cab (10), the first criterion stipulating that the housing (18A) is below the first straight line (D₁) and that the first straight line (D₁) intersects the slide (22), preferably the base (22A) of the slide.

2. The method of claim 1, wherein the method further comprises the steps of:
- providing third data on the dimensions of a second driver model and the driving posture of said second driver model in the driving cab (10), the second driver model having eyes, the second driver model being different from the first driver model,
- determining a third position (P3) from the third data, the third position (P3) being the position of a midpoint between the eyes of the second driver model when said second driver model is in a driving posture in the driving cab (10),
the first position (P1) and the third position (P3) defining a second straight line (D₂), and
- determining a second criterion for optimizing the positioning of the display (18) in the driving cab (10), the second criterion stipulating that the housing (18A) is below the second straight line (D₂) and that the slide (22) intersects the second straight line (D₂).

3. The method according to claim 2, wherein the method further comprises a step of determining a fourth criterion for optimizing the positioning of the display (18) in the driving cab (10), the fourth criterion stipulating that the slide (22) is perpendicular to the second straight line (D₂).

4. The method according to any one of claims 1 to 3, wherein the method further comprises the steps of:
- providing fourth data on the dimensions of a third driver model and on the driving posture of said third driver model in the driving cab (10), the third driver model having eyes, the third driver model being different from the first and second driver models,
- determining a fourth position (P4) from the fourth data, the fourth position (P4) being the position of a midpoint between the eyes of the third driver model when said third driver model is in a driving posture in the driving cab (10),
the first position (P1) and the fourth position (P4) defining a third straight line (D₃), and
- determining a third criterion for optimizing the positioning of the display (18) in the driving cab (10), the third criterion stipulating that the housing (18A) is below the third line (D₃).

5. The method according to claim 4, wherein:
- when the first criterion is met, the distance along the first straight line (Dᵢ) between the second position (P2) and the slide (22) of the head-up display (18) is between 825 mm and 875 mm, preferably equal to 850 mm, and
- when the third criterion is met, the distance along the third straight line (D3) between the fourth position (P4) and the slide (22) of the head-up display (18) is between 975 mm and 1,025 mm, preferably equal to 1,000 mm.

6. The method according to any one of claims 1 to 5, wherein the or one of the conductor models is selected so as to represent:
- the fifth percentile of the female population, or
- the fiftieth percentile of the male population, or
- the ninety-fifth percentile of the male population.

7. The method according to any one of claims 1 to 6, wherein the method comprises a step of positioning the element (30) in the driving cab (10) of the vehicle (11) according to the determined criterion or criteria.

8. The method according to any one of claims 1 to 7, wherein the element (30) is a cylinder having the following dimensions:
- a height of between 1,100 mm and 1,200 mm, preferably 1,100 mm,
- a diameter of between 290 mm and 310 mm, preferably 300 mm,
the element (30) being at a distance (D₀) of between 900 mm and 1,100 mm, preferably equal to 1,000 mm from the front end of the driving cab (10).

9. A computer program product comprising a readable information medium having stored thereon a computer program comprising program instructions, the computer program being loadable onto a data processing unit and adapted to cause an optimization method according to any of claims 1 to 8 to be implemented when the computer program is implemented on the data processing unit.
